# EUROPEAN PATENT SPECIFICATION

(11) **EP 2 230 267 B1**
(45) Date of publication and mention of the grant of the patent: **13.08.2014**
(21) Application number: 09155678.7
(22) Date of filing: 20.03.2009
(51) Int. Cl.: C08J 3/20, C08L 63/00, H01B 3/40

(54) **Method of producing a curable epoxy resin composition**
Verfahren zur Herstellung von härtbaren Epoxidharzzusammensetzungen
Procédé de préparer des résines époxy durcissable

(43) Date of publication of application: 22.09.2010
(73) Proprietor: ABB Research Ltd., 8050 Zürich (CH)
(72) Inventor: Ghoul, Cherif, F-68200, Mulhouse (FR); Gerig, Willi, CH-5504, Othmarsingen (CH); Bodmer, Urs, CH-5405, Baden-Dättwil (CH); Tilliette, Vincent, CH-8049, Zürich (FR)
(74) Representative: Zimmermann & Partner

(56) References cited:
- EP-A- 0 599 600
- EP-A- 1 491 566
- WO-A-97/00915
- WO-A-2008/009560
- US-B1- 6 764 616
- TEH ET AL: "The properties of epoxy resin coated silica fillers composites", MATERIALS LETTERS, NORTH HOLLAND PUBLISHING COMPANY. AMSTERDAM, NL, vol. 61, no. 11-12, 13 April 2007 (2007-04-13), pages 2156-2158, XP022027203, ISSN: 0167-577X, DOI: 10.1016/J.MATLET.2006.08.036
- KANG S ET AL: "Preparation and characterization of epoxy composites filled with functionalized nanosilica particles obtained via sol-gel process", POLYMER, ELSEVIER SCIENCE PUBLISHERS B.V, GB, vol. 42, no. 3, 1 February 2001 (2001-02-01), pages 879-887, XP004218056, ISSN: 0032-3861, DOI: 10.1016/S0032-3861(00)00392-X
- RAGOSTA ET AL: "Epoxy-silica particulate nanocomposites: Chemical interactions, reinforcement and fracture toughness", POLYMER, ELSEVIER SCIENCE PUBLISHERS B.V, GB, vol. 46, no. 23, 14 November 2005 (2005-11-14), pages 10506-10516, XP005115630, ISSN: 0032-3861, DOI: 10.1016/J.POLYMER.2005.08.028

## Description

### Field of Invention

The present invention refers to a method of producing a curable epoxy resin composition as defined in claim 1 comprising an epoxy resin component, a filler component and a hardener component and optionally further additives, which has been produced by intensively mixing together at least a part of the epoxy resin component and at least a part of the filler component and optionally some or all of the additives, under defined conditions, previously to mixing theses components with the hardener component and with the remaining optional additives which are present in the curable epoxy resin composition. The resulting cured epoxy resin composition has improved mechanical properties such as flexural properties, tensile properties or fracture toughness, combined with excellent electrical properties and is specially suited for casting electrical insulations.

### State of the Art

Epoxy resin compositions are commonly used as insulating materials for electrical applications because the compositions generally have a comparatively low price, are easy to process and, after curing, yield electrical insulator systems with good electrical and mechanical properties. In order to enhance specific properties, such as mechanical and electrical properties or the thermal conductivity or to reduce cost, epoxy resins are often filled with inorganic filler materials such as silica, quartz, known silicates, aluminium oxide, aluminium trihydrate, as well as other filler materials known to be used in electrical applications. The usual way to prepare filled epoxy resin compositions is to mix all the components, i.e. the epoxy resin component, the hardener component, the filler material, and the optional further additives, at a temperature which is not higher than the casting temperature of the final epoxy resin composition. The obtained mixture is then poured into a mould and the mould is put into an oven for curing, yielding the cured electrical insulator.

Commercial markets require that electrical devices withstand various types of tests including dielectric tests (voltage and partial discharge tests, power tests, etc.), mechanical tests (bending, torsion, vibration, pressure test, etc.), thermal and thermo-mechanical tests, etc. For some specific applications, these tests show that cured filler containing epoxy resin compositions are often too brittle.

In order to improve the mechanical properties and especially to reduce the brittleness of filler containing epoxy resin compositions, special additives, so called tougheners, are often added to the curable epoxy resin composition. However, the incorporation of such tougheners renders the production of the epoxy resin composition more complicated and often impairs the thermal or thermo-mechanical properties of the cured product. Therefore, it would be advantageous to prepare a curable epoxy resin composition with improved mechanical properties, especially with respect to brittleness, without the use of additional additives, whereby said curable epoxy resin compositions are suitable for producing therefrom electrical insulators and are compatible with conventional vacuum casting or Automated Pressure Gelation (APG) manufacturing processes.

### Summary of the Invention

It has now been found that cured epoxy resin compositions with significantly improved mechanical properties, such as flexural properties, tensile properties and fracture toughness, and without impairing the electrical or thermo-mechanical properties, are surprisingly obtained by a method according to claim 1, when the curable epoxy resin composition comprising an epoxy resin component and a filler component and a hardener component as well as optionally further additives, is produced by intensively and separately mixing together at least a part of the epoxy resin component and at least a part of the filler component and optionally some or all of the further additives at a temperature higher than the casting temperature of the curable epoxy resin composition, previously to mixing theses components with the hardener component and with any remaining optional additives present in the curable epoxy resin composition. For this mixing process a standard mixing procedure can be used.

### Description of the Invention

The present invention is defined in the claims.

The present invention further refers to a method of producing a curable epoxy resin composition comprising an epoxy resin component, a filler component and a hardener component and optionally further additives as defined in claim 1, characterized in that said method comprises the steps of separately mixing together at least a part of the epoxy resin component and at least a part of the filler component and optionally some or all of the further additives, at a temperature higher than the casting temperature of the curable epoxy resin composition to be produced, and mixing the resulting mixture of said components with the hardener component and with any remaining optional additives present in the curable epoxy resin composition.

"At least a part of the epoxy resin component" means that at. least 50% by weight, preferably 65% by weight, preferably 80% by weight, preferably 90% by weight and preferably 100% by weight of the epoxy resin component are separately mixed together with at least a part of the filler component and optionally some or all of the further additives.

"At least a part of the filler component" means that at least 30% by weight, preferably 50% by weight, preferably 70% by weight, preferably 90% by weight and preferably 100% by weight of the filler component are separately mixed with the epoxy resin component and optionally with some or with all of the further additives.

Preferably 100% by weight of the epoxy resin component present within the epoxy resin composition and 100% by weight of the filler component present within the epoxy resin composition and optionally some or all of the further additives are separately mixed together at a temperature higher than the casting temperature of the curable epoxy resin composition to be produced with said epoxy resin component.

At a temperature higher than the casting temperature of the curable epoxy resin composition to be produced with said epoxy resin component means that said temperature is within the range of 100°C to 180°C, and preferably within the range of 100°C to 140°C.

Said mixing process is preferably, but not necessarily, carried out under vacuum, preferably at a pressure of less than 100 mbar (<100 mbar), preferably less than 50 mbar (<50 mbar), preferably less than 20 mbar (<20 mbar) and preferably less than 10 mbar (<10 mbar).

Said mixing process is preferably carried out for a time period within the range of 10 minutes to twenty-four hours, preferably for a time period within the range of 30 minutes to six hours, and more preferably within the range of one hour to three hours.

The epoxy resin component as used according to the present invention within the curable epoxy resin composition contains at least two 1,2-epoxy groups per molecule. Cycloaliphatic and cycloaromatic epoxy resin compounds useful for the present invention comprise unsubstituted glycidyl groups and/or glycidyl groups substituted with methyl groups. These glycidyl compounds have an epoxy value (equiv./kg) preferably of at least three, preferably at least four and especially at about five or higher, preferably about 5.0 to 6.1. Preferred are for example optionally substituted epoxy resins of formula (I): 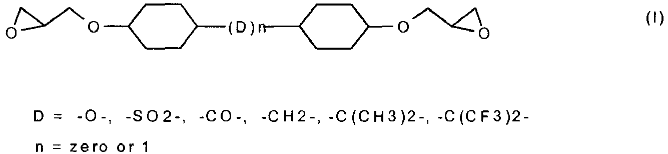 or optionally substituted epoxy resins of formula (II):

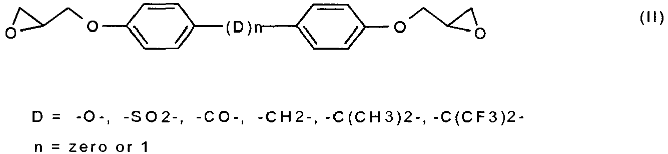

Compounds of formula (I) or formula (II) wherein D is [-(CH₂)-] or [-C(CH₃)₂-] are preferred. Preferred further are compounds of formula (II) wherein D is [-(CH₂)-] or [-C(CH₃)₂-], and preferably [-C(CH₃)₂-], i.e. diglycidylether of 2,2-bis-(4-hydroxy-phenyl)-propane [diglycidylether of bisphenol A (DGEBA)]. DGEBA is commercially available as an epoxy resin component, e.g. as Epilox A19-00 (Leuna Harze GmbH.) or similar products. DGEBA as preferably used in the present invention has an epoxy value (equiv./kg) of at least three, preferably at least four and especially at about five or higher, preferably about 5.0 to 6.1.

Preferred cycloaliphatic epoxy resin compounds are for example Araldite® CY 184 (Huntsman Advanced Materials Ltd.), a cycloaliphatic diglycidylester epoxy resin compound having an epoxy content of 5.80-6.10 (equiv/kg).

Further epoxy resins to be used within the scope of the present invention are for example hexahydro-o-phthalic acid-bis-glycidyl ester, hexahydro-m-phthalic acid-bis-glycidyl ester or hexahydro-p-phthalic acid-bis-glycidyl ester. Preferred epoxy resin compounds are liquid at room temperature or when heated to a temperature of up to about 100°C.

The present epoxy resin composition comprises an epoxy resin component and a filler which have been treated according to the present invention. Said epoxy resin component may optionally contain additives. Said epoxy resin component can be used in any curable epoxy resin composition, such as in hardener cured epoxy resin compositions as well as in compositions that do not contain a hardener component for curing the composition. The effect of the invention is also obtained for compositions containing a homopolymerizable epoxy resin component, yielding a homopolymerized epoxy resin composition, or in a amine cured epoxy resin composition or in any other known polymerisable epoxy resin composition.

Numerous hardeners are known to be used as hardener component in epoxy resin compositions. The preferred hardener component is an acid anhydride. Such anhydrides are preferably aliphatic and cycloaliphatic or aromatic polycarbonic acid anhydrides. Preferred are phthalic anhydride, a tetra-hydrophtalic anhydride (THPA), a hexahydrophtalic anhydride (HHPA), a methylhydrophthalic anhydride, a methyltetrahydrophthalic anhydride (MTHPA), a methyl-hexahydrophtalic anhydride (MHHPA), or a methyl-nadic anhydride (MNA) or a mixture thereof.

MTHPA, for example, is commercially available and exists in different forms, e.g. as 4-methyl-1,2,3,6-tetrahydrophthalic anhydride or as 4-methyl-3,4,5,6-tetrahydrophthalic anhydride. Although the different forms are not critical for the application in the present invention, 4-methyl-1,2,3,6-tetrahydrophthalic anhydride and 4-methyl-3,4,5,6-tetrahydrophthalic anhydride are the preferred compounds to be used.

Methyltetrahydrophthalic anhydride (MTHPA) is often supplied commercially as a mixture containing MTHPA isomers as the main component, together with other anhydrides, such as tetrahydrophthalic anhydride (THPA), methylhexahydrophthalic anhydride (MHHPA) and/or phthalic anhydride (PA). Such mixtures may also be used within the scope of the present invention. The content of MTHPA within such a mixture is preferably at least 50% by weight, preferably at least 60% by weight, preferably at least 70% by weight, preferably at least 80% by weight, and preferably at least 90% by weight, calculated to the total weight of the mixture.

The hardener component within the epoxy resin composition is present preferably in concentrations within the range of 0.8 to 1.2 reactive group equivalents of the hardener component, calculated per one epoxy equivalent present in the epoxy resin component; preferably one reactive group equivalent of the hardener component, per one epoxy equivalent present in the epoxy resin component.

The filler component is preferably selected from conventional filler materials as are generally used as fillers in electrical insulations. Preferably said filler is selected from the group of filler materials comprising inorganic oxides, inorganic hydroxides and inorganic oxyhydroxides, preferably silica, quartz, known silicates, aluminium oxide, aluminium trihydrate [ATH], titanium oxide or dolomite [CaMg(CO₃)₂], wollastonite, glass beads, metal nitrides, such as silicon nitride, boron nitride and aluminium nitride or metal carbides, such as silicon carbide as well as cut or continuous reinforcing fibers of known composition, length and diameters. Also a mixture of different fillers may be used. Preferred are silica and quartz, specifically silica flour, with a SiO₂-content of about 95-98% by weight.

The filler material has an average grain size as known for the use in electrical insulation systems and is generally within the range of 100 nm (nanometer) up to 3 mm. Preferred, however, is an average grain size (at least 50% of the grains) within the range of about 1 µm to 300 µm, preferably from 5 µm to 100 µm, or a selected mixture of such average grain sizes. Preferred also is a filler material with a high surface area.

The filler component is present in the epoxy resin composition, depending on the final application of the epoxy resin composition, preferably within the range of about 50% by weight to about 80% by weight, preferably within the range of about 55% by weight to about 75% by weight, preferably at about 60% by weight to about 70% by weight, preferably at about 65% by weight to about 70% by weight, calculated to the total weight of the epoxy resin composition.

The filler material optionally may be present in a "porous" form. As a porous filler material, which optionally may be coated, is understood, that the density of said filler material is within the range of 60% to 80%, compared to the real density of the non-porous filler material. Such porous filler materials have a higher total surface area than the non-porous material. Said surface area is higher than 0.3 m²/g (BET m²/g) and preferably higher than 0.4 m²/g (BET) and preferably is within the range of 0.4 m²/g (BET) to 100 m²/g (BET), preferably within the range of 0.5 m²/g (BET) to 80 m²/g (BET)

The curable epoxy resin composition defined in the present invention may comprise an electrically conductive or semi-conductive filler material, such that the electrical volume resistivity of the cured epoxy resin composition is reduced, preferably within the range of about 10E9 Ω.cm to 10E14 Ω.cm, preferably within the range of about 10E10 Ω.cm to 10E14 Ω.cm, preferably within the range of about 10E12 Ω.cm to 10E14 Ω.cm.

Further conductive or semi-conductive material may be selected from doped metal oxides, antimony trioxide, zinc oxide, carbon black, or metal coated insulating filler. The semi-conductive or conductive filler is present in the epoxy resin composition, depending on the final application of the epoxy resin composition, preferably within the range of about 0.0001% by weight to about 1% by weight, preferably within the range of about 0.001% by weight to about 0.5% by weight, preferably at about 0.001% by weight to about 0.01% by weight, calculated to the total weight of the epoxy resin composition.

The curable epoxy resin composition defined in the present invention may comprise further a curing agent for enhancing the polymerization of the epoxy resin with the hardener. Further additives may be selected from hydrophobic compounds including silicones, wetting/dispersing agents, plasticizers, antioxidants, light absorbers, pigments, flame retardants, fibers, tougheners and other additives generally used in electrical applications. These are known to the expert.

Preferred curing agents are for example tertiary amines, such as benzyldimethylamine or amine-complexes such as complexes of tertiary amines with boron trichloride or boron trifluoride; urea derivatives, such as N-4-chlorophenyl-N',N'-dimethylurea (Monuron); optionally substituted imidazoles such as imidazole or 2-phenyl-imidazole. Preferred are tertiary amines, especially 1-substituted imidazole and/or N,N-dimethylbenzylamine, such as 1-alkyl imidazoles which may or may not be substituted also in the 2-position, such as 1-methyl imidazole or 1-isopropyl-2-methyl imidazole. Preferred is 1-methyl imidazole. The amount of catalyst used is a concentration of about 0.1% to 2.0% by weight, calculated to the weight of the epoxy resin component present in the composition and is conventional.

Suitable hydrophobic compounds or mixtures of such compounds, especially for improving the self-healing properties of the electrical insulator may be selected from the group comprising flowable fluorinated or chlorinated hydrocarbons which contain -CH₂-units, -CHF-units, -CF₂-units, -CF₃-units, -CHCl-units, -C(Cl)₂-units, -C(Cl)₃-units, or mixtures thereof; or a cyclic, linear or branched flowable organopolysiloxane. Such compounds, also in encapsulated form, are known per se.

Suitable polysiloxanes are known and may be linear, branched, cross-linked or cyclic. Preferably the polysiloxanes are composed of -[Si(R)(R)O]-groups, wherein R independently of each other is an unsubstituted or substituted, preferably fluorinated, alkyl radical having from 1 to 4 carbon atoms, or phenyl, preferably methyl, and wherein said substituent R may carry reactive groups, such as hydroxyl or epoxy groups. Non-cyclic siloxane compounds preferably on average have about from 20 to 5000, preferably 50-2000, -[Si(R)(R)O]-groups. Preferred cyclic siloxane compounds are those comprising 4-12, and preferably 4-8, [Si(R)(R)O]-units.

The hydrophobic compound is added to the epoxy resin composition preferably in an amount of from 0.1% to 10%, preferably in an amount of from 0.25% to 5% by weight, preferably in an amount of from 0.25% to 3% by weight, calculated to the weight of the weight of the epoxy resin component present.

Suitable processes for casting curable epoxy resin compositions, including the curable epoxy resin composition of the present invention, are for example the Vacuum Casting Process and the Automated Pressure Gelation (APG) Process. These processes are carried out at a casting temperature within the range of room temperature to 150°C, preferably within the range of 50°C to 150°C, typically at a temperature of about 65°C. This further means that the epoxy resin component of the present invention, which has been obtained by separately mixing together at least a part of the epoxy resin component and at least a part of the filler component and optionally some or all of the further additives, at a temperature higher than the casting temperature of the curable epoxy resin composition to be produced, preferably is cooled down after mixing to at least the casting temperature of the final curable epoxy resin composition, before mixing said epoxy resin component with the hardener and with any remaining optional additives present in the curable epoxy resin composition.

The uncured epoxy resin composition is cured at a temperature of room temperature to about 280°C, preferably within the range of 50°C to 280°C, preferably within the range of 100°C to 200°C, preferably within the range of 100°C to 170°C, and preferably at about 130°C and during a curing time within the range of about 30 minutes to about 10 hours. Curing generally is possible also at lower temperatures, whereby at lower temperatures complete curing may last up to several days depending on the catalyst present and its concentration. The Vacuum Casting Process and the Automated Pressure Gelation (APG) Process when being applied to a composition of the present invention also typically include such a curing step in the mold for a time sufficient to shape the epoxy resin composition into its final infusible three dimensional structure.

Preferred uses of the electrical insulation systems produced with epoxy resin compositions according to the present invention are dry-type transformers, cable terminations, insulators for gas insulated switchgears, particularly cast coils for dry type distribution transformers, especially vacuum cast dry distribution transformers, which within the resin structure contain electrical conductors, and in the casting of electrical components such as bushings, switches, insulators, sensors, converters, cable end seals and insulators. These may be produced also for medium and high-voltage insulations for indoor and outdoor use, like breakers or switchgear applications; medium and high voltage bushings; as long-rod, composite and cap-type insulators, and also for base insulators in the medium-voltage sector, in the production of insulators associated with outdoor power switches, measuring transducers, leadthroughs, and overvoltage protectors, in switchgear constructions, in power switches, and electrical machines, as coating materials for transistors and other semiconductor elements and/or to impregnate electrical components. The following examples illustrate the invention without limiting the scope of the claimed invention.

### Examples 1, 3 and 5 (Reference Examples)

In Examples 1, a Reference Example as a standard silica filled epoxy resin composition was prepared according to the standard mixing procedure. All the components apart from the catalyst were mixed during 1 hour at 65°C under vacuum (<1mbar). Then the catalyst was added and the mixture was stirred 10 minutes at 65°C under vacuum (<1mbar), before being poured into the moulds under vacuum (30 mbar). The moulds were then put in an oven for curing and post-curing.

In Example 3, a Reference Example as a standard aluminium oxide filled solid epoxy resin composition was prepared according to a state of the art mixing procedure. The three components (epoxy, hardener and filler) were mixed at 125°C under vacuum (<1mbar) until the hardener was completely dissolved. The material was then poured into moulds under vacuum (about 30 mbar) and the moulds were put in an oven at 130°C for curing.

In Example 5, a Reference Example as a standard aluminium oxide filled epoxy resin based on liquid components was prepared according to a mixing method known as state of the art. All the components apart from the catalyst were first mixed together at 70°C under vacuum (<1mbar) till an homogeneous mixture was obtained, then the catalyst was slowly added and the mixture stirred under vacuum for additional 10 minutes. The resin was poured into moulds under vacuum (30mbars), and put in an oven for curing and post-curing the resin.

The properties of the Reference Examples 1, 3 and 5 are listed in Table 1.

### Examples 2, 4 and 6

In Example 2, the same components as in Reference Example 1 were used but the mixing procedure according to the present invention was applied. The epoxy resin component was first mixed with the silica filler and the flexibilizer at 140°C during 1 hour under vacuum (<1mbar). The mixture was then cooled to 65°C and mixed with the hardener under vacuum (<1mbar). The catalyst was finally added, the mixture was stirred for 10 minutes and poured into moulds under vacuum (30 mbar). The moulds were put in an oven for curing and post-curing.

In Example 4, the same components were used as in Reference Example 3 but the mixing procedure according to the present invention was used. The epoxy resin component was first pre-mixed with the filler component at 130°C during 1 hour under vacuum (<1mbar). Then, the hardener was added to this premix, and the mixture stirred till the hardener was completely dissolved. The final mixture was then poured into mould under vacuum (about 30 mbar), and put in an oven at 130°C for curing and post-curing the resin.

In Example 6, the same components were used as in Example 5, but the mixing procedure according to the present invention was used. The epoxy resin was first pre-mixed with the filler and the flexibilizer at a temperature of 140°C during 1 hour; then the mixture was cooled down to 70°C, and the hardener was added. This mixture was stirred during 1 hour at 70°C under vacuum (<1mbar), the catalyst was finally added and the blend stirred under vacuum for additional 10 minutes. The obtained epoxy resin composition was then poured into the moulds under vacuum (about 30 mbar) and the moulds were put in an oven at 130°C for curing and post-curing the resin.

The properties of the Examples 2, 4 and 6 are also listed in Table 1. The comparative results as shown in Table 1 prove that the cured epoxy resin compositions made according to Examples 2, 4, and 6 exhibit significantly improved mechanical properties compared to the Reference Examples 1, 3, and 5, without impairing the thermo-mechanical properties.

**Table 1**

| MATERIAL | **1** | **2** | **3** | **4** | **5** | **6** |
|---|---|---|---|---|---|---|
| INGREDIENT (phr) | **SiO2 filled epoxy** | | **Al2O3 filled epoxy** | | **Al2O3 filled epoxy** | |
| Epoxy (1) EEVV = 350-450 | | | 100 | 100 | | |
| DOEBA (2) EEW = 160-220 | 100 | 100 | | | 100 | 100 |
| Phtalic anhydride (3) MW = 130-160 | | | 30 | 30 | | |
| Phtalic anhydride (4) MW= 150-200 | 89 | 89 | | | 84 | 84 |
| Polyglycol (5) | 22 | 22 | | | 10 | 10 |
| Alumina (6) | | | 190 | 190 | 292 | 292 |
| Silica (7) | 370 | 370 | | | | |
| Imidazole catalyst (8) | 0.5 | 0.5 | | | 0.5 | 0.5 |
| Mixing process | Standard | **New** | Standard | **New** | Standard | **New** |
| MECHANAL PROPERTIES | | | | | | |
| Flexural properties ISO 178 | | | | | | |
| Flexural strength (MPa) | 120 MPa | 150 MPa | 110MPa | 140 MPa | 110 MPa | 140APa |
| Elongation at break (%) | 1.40% | 1.80% | 1.60% | 2.40% | 1.20% | 2% |
| Tencile properties ISO 527 | | | | | | |
| Tensile strength (MPa) | 70 MPa | 85 MPa | 70 MPa | 75MPa | 55 MPa | 75 MPa |
| Young modulus (GPa) | 10 GPa | 10 GPa | 7.5 GPa | 7.5 GPa | 8 GPa | 8 GPa |
| Elongation at break (%) | 0.85% | 1.10% | 1.00% | 1.40% | 0.70% | 1.20% |
| Fracture toughness Ciba Geigy Double Tension Test | | | | | | |
| K1c (MP.m1/2) | 2MPa.m1/2 | 2.7 MPa.m1/2 | 1.6 MPa.m1/2 | 1.7 MPa.m1/2 | 1.6 MPa.m1/2 | 1.8MPa.m1/2 |
| Glc (J/m2) | 360 J/m2 | 560 J/m2 | 330 J/m2 | 330 J/m2 | 280 J/m2 | 310 J/m2 |
| Thermomechanical properties | | | | | | |
| Tg (°C) | 85°C | 85°C | 120°C | 120°C | 125°C | 125°C |

| | | | | | | |
|---|---|---|---|---|---|---|
| (1), (2), (3), (5) supplied by Hexion (4) Supplied by Polynt (8) Supplied by Huntsman (6) Supplied by Almatis EEW = epoxy equivalent weight (7) Supplied by Quarzwerke MW = molecular weight | | | | | | |

## Claims

1. Method of producing a curable epoxy resin composition comprising an epoxy resin component and a filler component and a hardener component and optionally further additives, **characterized in that** said curable epoxy resin composition is produced by (a) mixing together at least 50% by weight of the epoxy resin component and at least 30% by weight of the filler component and optionally some or all of the optional additives, previously to mixing these components with the hardener component and with any remaining optional additives present in the curable epoxy resin composition, and that (b) said mixing together of at least 50% by weight of the epoxy resin component and at least 30% by weight of the filler component and optionally some or all of the optional additives is carried out at a temperature within the range of 100°C to 180°C.

2. Method according to claim 1, **characterized in that** at least 65% by weight of the epoxy resin component have been mixed together with at least a part of the filler component and optionally with some or with all of the further additives.

3. Method according to claim 1 or 2, **characterized in that** at least 50% by weight, preferably 70% by weight, preferably 90% by weight and preferably 100% by weight of the filler component have been mixed with the epoxy resin component and optionally with some or with all of the further additives.

4. Method according to any one of the claims 1-3, **characterized in that** 100% by weight of the epoxy resin component present within the epoxy resin composition and 100% by weight of the filler component present within the epoxy resin composition and optionally some or all of the further additives have been mixed together at a temperature within the range of 100°C to 180°C.

5. Method according to any one of the claims 1-4, **characterized in that** said mixing process was carried out under vacuum, preferably at a pressure of less than 100 mbar, preferably less than 50 mbar, preferably less than 20 mbar and preferably less than 10 mbar.

6. Method according to any one of the claims 1-4, **characterized in that** said mixing process was carried out for a time period within the range of ten minutes to twenty-four hours, preferably for a time period within the range of thirty minutes to six hours, and more preferably within the range of one hour to three hours.

7. Method according to any one of the claims 1-6, **characterized in that** the epoxy resin component is a cycloaliphatic or aromatic epoxy resin compound comprising unsubstituted glycidyl groups and/or glycidyl groups substituted with methyl groups, wherein these glycidyl compounds have an epoxy value (equiv./kg) of at least two 1,2-epoxy groups per molecule, preferably of at least three, preferably at least four and especially at about five or higher, preferably an epoxy value about 5.0 to 6.1 (equiv./kg).

8. Method according to any one of the claims 1-6, **characterized in that** the epoxy resin component is hexahydro-o-phthalic acid-bis-glycidyl ester, hexahydro-m-phthalic acid-bis-glycidyl ester or hexahydro-p-phthalic acid-bis-glycidyl ester.

9. Method according to claim 1-8, **characterized in that** said hardener is a known compound used as hardener component in epoxy resin compositions, and preferably is an acid anhydride, preferably an aliphatic and cycloaliphatic or aromatic polycarbonic acid anhydrides, preferably a phthalic anhydride, a tetrahydrophtalic anhydride, a hexahydrophtalic anhydride, a methylhydrophthalic anhydride, a methyltetrahydrophthalic anhydride, a methyl-hexahydrophtalic anhydride, or a methyl-nadic anhydride or a mixture thereof.

10. Method according to any one of the claims 1-9, **characterized in that** said filler component is selected from conventional filler materials as are generally used as fillers in electrical insulations, preferably selected from the group of filler materials comprising inorganic oxides, inorganic hydroxides and inorganic oxyhydroxides, preferably silica, quartz, known silicates, aluminium oxide, aluminium trihydrate, titanium oxide or dolomite, wollastonite, glass beads, metal nitrides, preferably silicon nitride, boron nitride and aluminum nitride or metal carbides, preferably silicon carbide as well as cut or continuous reinforcing fibers of known composition, length and diameters or a mixture of such filler materials, preferably silica and/or quartz, preferably silica flour, with a SiO₂-content of about 95-98% by weight.

11. Method according to any one of the claims 1-10, **characterized in that** the mineral filler is present in the epoxy resin composition, within the range of about 50% by weight to about 80% by weight, preferably within the range of about 55% by weight to about 75% by weight, preferably at about 60% by weight to about 70% by weight, preferably at about 65% by weight to about 70% by weight, calculated to the total weight of the epoxy resin composition.

12. Method according to any one of the claims 1-11, **characterized in that** the mineral filler is present in a porous form having density within the range of 60% to 80%, compared to the density of the non-porous filler material.

13. Method according to any one of the claims 1-12, **characterized in that** said curable epoxy resin composition comprises further additives selected from curing agents, hydrophobic compounds including silicones, wetting/dispersing agents, plasticizers, antioxidants, light absorbers, pigments, flame retardants, fibers, tougheners and other additives generally used in electrical applications.

14. Method of curing the uncured epoxy resin composition prepared according to a method of any one of the claims 1-15, optionally under the application of vacuum, **characterized in that** the uncured epoxy resin composition is heated to a temperature within the range of 50°C to 280°C, preferably within the range of 100°C to 200°C, preferably within the range of 100°C to 170°C, and preferably at about 130°C during a curing time within the range of about 30 minutes to about 10 hours.

15. Method according to claim 14, **characterized in that** said method of curing the uncured epoxy resin composition is applied during the Vacuum Casting Process or Automated Pressure Gelation (APG) Process to a composition as defined in any one of the claims 1-16, wherein said processes are carried out at a casting temperature within the range of 50°C to 150°C, typically at a temperature of about 65°C, and wherein such curing step is carried out in a mold for a time sufficient to shape the epoxy resin composition into its final infusible three dimensional structure.

## Patentansprüche

1. Verfahren zum Herstellen einer aushärtbaren Epoxidharz-Zusammensetzung, umfassend einen Epoxidharz-Bestandteil und einen Füllbestandteil und einen Härterbestandteil und optionalen weitere Zusätze, **dadurch gekennzeichnet, dass** die aushärtbare Epoxidharz-Zusammensetzung hergestellt wird durch (a) Zusammenmischen von wenigstens 50 Gewichtsprozent des Epoxidharz-Bestandteils und wenigstens 30 Gewichtsprozent des Füllbestandteils und optional von einigen oder allen der optionalen Zusätze, vor dem Mischen dieser Bestandteile mit dem Härterbestandteil und mit irgendwelchen verbleibenden optionalen Zusätzen, die in der aushärtbaren Epoxidharz-Zusammensetzung vorhanden sind, und dass (b) das Zusammenmischen der wenigstens 50 Gewichtsprozent des Epoxidharz-Bestandteils und der wenigstens 30 Gewichtsprozent des Füllbestandteils und optional von einigen oder allen der optionalen Zusätze bei einer Temperatur im Bereich von 100°C-180°C durchgeführt wird.

2. Verfahren nach Anspruch 1, **dadurch gekennzeichnet, dass** wenigstens 65 Gewichtsprozent des Epoxidharz-Bestandteils mit wenigstens einem Teil des Füllbestandteils und optional mit einigen oder mit allen der weiteren Zusätze zusammengemischt wurden.

3. Verfahren nach Anspruch 1 oder 2, **dadurch gekennzeichnet, dass** wenigstens 50 Gewichtsprozent, vorzugsweise 70 Gewichtsprozent, vorzugsweise 90 Gewichtsprozent und vorzugsweise 100 Gewichtsprozent des Füllbestandteils mit dem Epoxidharz-Bestandteil und optional mit einigen oder mit allen der weiteren Zusätze gemischt wurden.

4. Verfahren nach einem der Ansprüche 1 bis 3, **dadurch gekennzeichnet, dass** 100 Gewichtsprozent des in der Epoxidharz-Zusammensetzung vorhandenen Epoxidharz-Bestandteils und 100 Gewichtsprozent des in der Epoxidharz-Zusammensetzung vorhandenen Füllbestandteils und optional einige oder alle der weiteren Zusätze bei einer Temperatur im Bereich von 100°C-180°C zusammengemischt wurden.

5. Verfahren nach einem der Ansprüche 1 bis 4, **dadurch gekennzeichnet, dass** der Mischvorgang unter Vakuum durchgeführt wurde, vorzugsweise bei einem Druck von weniger als 100 mbar, vorzugsweise weniger als 50 mbar, vorzugsweise weniger als 20 mbar und vorzugsweise weniger als 10 mbar.

6. Verfahren nach einem der Ansprüche 1 bis 4, **dadurch gekennzeichnet, dass** der Mischvorgang für eine Zeitperiode im Bereich von 10 Minuten bis 24 Stunden durchgeführt wurde, vorzugsweise für eine Zeitperiode im Bereich von 30 Minuten bis 6 Stunden, und noch bevorzugter im Bereich von 1 Stunde bis 3 Stunden.

7. Verfahren nach einem der Ansprüche 1 bis 6, **dadurch gekennzeichnet, dass** der Epoxidharz-Bestandteil ein cycloaliphatischer oder aromatischer Epoxidharz-Stoff ist, umfassend nicht-substituierte Glycidylgruppen und/oder Glycidylgruppen, die mit Methylgruppen substituiert sind, wobei diese Glycidylstoffe einen Epoxidwert (Äquivalent/kg) von wenigstens zwei 1,2-Epoxidgruppen pro Molekül aufweisen, vorzugsweise von wenigstens 3, vorzugsweise wenigstens 4 und insbesondere etwa 5 oder höher, und vorzugsweise einen Epoxidwert von 5,0-6,1 (Äquivalent/kg) aufweisen.

8. Verfahren nach einem der Ansprüche 1 bis 6, **dadurch gekennzeichnet, dass** der Epoxidharz-Bestandteil ein Hexahydro-o-Phthalsäure-bis-Glycidyl-Ester, Hexahydro-m-Phthalsäure-bis-Glycidyl-Ester oder Hexahydro-p-Phthalsäure-bis-Glycidyl-Ester ist

9. Verfahren nach einem der Ansprüche 1 bis 8, **dadurch gekennzeichnet, dass** der Härter ein bekannter Stoff ist, der als Härterbestandteil in Epoxidharz-Zusammensetzungen verwendet wird, und vorzugsweise ein Säureanhydrid, vorzugsweise ein aliphatisches und cycloaliphatisches oder aromatisches Polykohlensäure-Anhydrid, vorzugsweise ein Phthalsäureanhydrid, ein Tetrahydrophtalsäure-Anhydrid, Hexahydrophtalsäure-Anhydrid, ein Methylhydrophtalsäure-Anhydrid, ein Methyltetrahydrophtalsäure-Anhydrid, ein Methylhexahydrophtalsäure-Anhydrid oder ein Methylnadic-Anhydrid oder eine Mischung davon ist.

10. Verfahren nach einem der Ansprüche 1 bis 9, **dadurch gekennzeichnet, dass** der Füllbestandteil aus herkömmlichen Füllmaterialien ausgewählt ist, wie sie im allgemeinen als Füller in elektrischen Isolierungen verwendet werden, vorzugsweise ausgewählt aus der Gruppe von Füllmaterialien, die umfasst: anorganische Oxide, anorganische Hydroxide und anorganische Oxyhydroxide, vorzugsweise Silica, Quarz, bekannte Silikate, Aluminiumoxid, Aluminiumtrihydrat, Titanoxid oder Dolomit, Wollastonit, Glaskugeln, Metallnitride, vorzugsweise Siliziumnitrid, Bornitrid und Aluminiumnitrid oder Metallcarbide, vorzugsweise Siliziumcarbid als auch geschnittene oder kontinuierliche Verstärkungsfasern von bekannter Zusammensetzung, Länge und Durchmessern oder eine Mischung aus solchen Füllmaterialien, vorzugsweise Silica und/oder Quarz, vorzugsweise Quarzmehl, mit einem SiO₂-Gehalt von etwa 95-98 Gewichtsprozent.

11. Verfahren nach einem der Ansprüche 1 bis 10, **dadurch gekennzeichnet, dass** der Mineralfüller in der Epoxidharz-Zusammensetzung im Bereich von etwa 50 Gewichtsprozent bis etwa 80 Gewichtsprozent, vorzugsweise im Bereich von etwa 55 Gewichtsprozent bis et-wa 75 Gewichtsprozent, vorzugsweise bei etwa 60 Gewichtsprozent bis etwa 70 Gewichtsprozent, vorzugsweise bei etwa 65 Gewichtsprozent bis etwa 70 Gewichtsprozent vorhanden ist, berechnet bezüglich des Gesamtgewichts der Epoxidharz-Zusammensetzung.

12. Verfahren nach einem der Ansprüche 1 bis 11, **dadurch gekennzeichnet, dass** der Mineralfüller in einer porösen Form mit einer Dichte im Bereich von 60-80 % vorhanden ist, verglichen zur Dichte des nicht-porösen Füllmaterials.

13. Verfahren nach einem der Ansprüche 1 bis 12, **dadurch gekennzeichnet, dass** die aushärtbare Epoxidharz-Zusammensetzung weitere Zusätze umfasst, die ausgewählt sind aus Aushärtmitteln, hydrophobischen Stoffen umfassend Silicone, Benetzungs-/Dispergiermittel, Weichmachern, Antioxidantien, Lichtabsorbern, Pigmenten, Antiflammmitteln, Fasern, Zähigkeitsvermittlern und anderen Zusätzen, die im Allgemeinen bei elektrischen Anwendungen verwendet werden.

14. Verfahren zum Aushärten der gemäß einem Verfahren nach einem der Ansprüche 1 bis 13 vorbereiteten ungehärteten Epoxidharz-Zusammensetzung, optional unter Anwendung von Vakuum, **dadurch gekennzeichnet, dass** die ungehärtete Epoxidharz-Zusammensetzung auf eine Temperatur im Bereich von 50°C-280°C erhitzt wird, vorzugsweise im Bereich von 100°C-200°C, vorzugsweise im Bereich von 100°C-170°C, und vorzugsweise bei etwa 130°C während einer Aushärtezeit im Bereich von etwa 30 Minuten bis etwa 10 Stunden.

15. Verfahren nach Anspruch 14, **dadurch gekennzeichnet, dass** das Verfahren zum Aushärten der ungehärteten Epoxidharz-Zusammensetzung während eines Vakuum-Gießprozesses oder eines automatischen Druckgelierprozesses an einer Zusammensetzung wie in einem der Ansprüche 1 bis 13 definiert angewendet wird, wobei die Prozesse bei einer Gießtemperatur im Bereich von 50°C-150°C, typischerweise bei einer Temperatur von etwa 65°C ausgeführt werden, und wobei solche Aushärteschritte in einer Form für eine Zeit durchgeführt werden, die ausreicht, um die Epoxidharz-Zusammensetzung in ihre endgültige unauflösbare dreidimensionale Struktur zu formen.

## Revendications

1. Procédé de production d'une composition de résine époxy durcissable comprenant un composant à base de résine époxy et un composant de charge et un composant durcisseur et optionnellement d'autres additifs, **caractérisé par le fait que** ladite composition de résine époxy durcissable est produit (a) en mélangeant l'un avec l'autre au moins 50% en poids du composant de résine époxy et au moins 30% en poids du composant de charge et optionnellement certains ou tous les additifs optionnels, avant de mélanger ces composants avec le composant durcisseur et avec tous les additifs optionnels restants quelconques présents dans la composition de résine époxy durcissable, et **par le fait que** (b) ledit mélange l'un avec l'autre d'au moins 50% en poids du composant de résine époxy et d'au moins 30% en poids du composant de charge et optionnellement certains ou tous les additifs optionnels est réalisé à une température de l'ordre de 100°C à 180°C.

2. Procédé selon la revendication 1, **caractérisé par le fait qu'**au moins 65% en poids du composant de résine époxy a été mélangé avec au moins une partie du composant de charge et optionnellement avec certains ou avec tous les autres additifs.

3. Procédé selon la revendication 1 ou 2, **caractérisé par le fait qu'**au moins 50% en poids, de préférence 70% en poids, de préférence 90% en poids et de préférence 100% en poids du composant de charge a été mélangé avec le composant de résine époxy et optionnellement avec certains ou tous les autres additifs.

4. Procédé selon l'une quelconque des revendications 1 à 3, **caractérisé par le fait que** 100% en poids du composant de résine époxy présent dans la composition de résine époxy et 100% en poids du composant de charge présent dans la composition de résine époxy et, optionnellement, certains ou tous les autres additifs ont été mélangés l'un avec l'autre à une température de l'ordre de 100°C à 180°C.

5. Procédé selon l'une quelconque des revendications 1 à 4, **caractérisé par le fait que** ledit processus de mélange a été réalisé sous vide, de préférence à une pression inférieure à 100 mbar, de préférence inférieure à 50 mbar, de préférence inférieure à 20 mbar et de préférence inférieure de 10 mbar.

6. Procédé selon l'une quelconque des revendications 1 à 4, **caractérisé par le fait que** ledit processus de mélange a été réalisé pendant un laps de temps de l'ordre de dix minutes à vingt-quatre heures, de préférence pendant un laps de temps de l'ordre de 30 minutes à six heures, et plus préférablement de l'ordre d'une heure à trois heures.

7. Procédé selon l'une quelconque des revendications 1 à 6, **caractérisé par le fait que** le composant de résine époxy est un composé de résine époxy cyclo-aliphatique ou aromatique comprenant des groupes glycidyle non substitués et/ou des groupes glycidyle substitués par des groupes méthyle, où ces composés glycidyliques ont une valeur époxy (équiv./kg) d'au moins deux groupes 1,2-époxy par molécule, de préférence d'au moins trois, de préférence d'au moins quatre et en particulier d'environ cinq ou plus, de préférence une valeur époxy d'environ 5,0 à 6,1 (équiv./kg).

8. Procédé selon l'une quelconque des revendications 1 à 6, **caractérisé par le fait que** le composant de résine époxy est un ester d'acide-bis-glycidyle hexahydro-o-phtalique, un ester d'acide-bis-glycidyle m-hexahydro-phtalique ou un ester d'acide-bis-glycidyle hexahydro-p-phtalique.

9. Procédé selon les revendications 1 à 8, **caractérisé par le fait que** ledit durcisseur est un composé connu utilisé comme composant durcisseur dans des compositions de résine époxy, et est de préférence un anhydride d'acide, de préférence un anhydride d'acide polycarboxylique aliphatique et cyclo-aliphatique ou aromatique, de préférence un anhydride phtalique, un anhydride tétrahydrophtalique, un anhydride hexahydrophtalique, un anhydride méthylhydrophthalique, un anhydride méthyltétrahydrophtalique, un anhydride méthylhexahydrophtalique ou un anhydride méthylnadique ou un mélange de ceux-ci.

10. Procédé selon l'une quelconque des revendications 1 à 9, **caractérisé par le fait que** ledit composant de charge est choisi parmi les matériaux de charge classiques qui sont généralement utilisés comme charges dans les isolations électriques, de préférence choisis parmi le groupe de matériaux de charge comprenant les oxydes inorganiques, les hydroxydes inorganiques et les oxyhydroxydes inorganiques, de préférence la silice, le quartz, les silicates connus, l'oxyde d'aluminium, le trihydrate d'aluminium, l'oxyde de titane ou la dolomite, la wollastonite, les perles de verre, les nitrures métalliques, de préférence le nitrure de silicium, le nitrure de bore et le nitrure d'aluminium ou les carbures métalliques, de préférence le carbure de silicium ainsi que les fibres de renforcement coupées ou continues de composition, longueur et diamètre connus ou un mélange de tels matériaux de charge, de préférence de silice et/ou de quartz, de préférence de farine de silice, avec une teneur en SiO₂ d'environ 95 à 98% en poids.

11. Procédé selon l'une quelconque des revendications 1 à 10, **caractérisé par le fait que** la charge minérale est présente dans la composition de résine époxy, de l'ordre d'environ 50% en poids à environ 80% en poids, de préférence de l'ordre d'environ 55% en poids à environ 75% en poids, de préférence d'environ 60% en poids à environ 70% en poids, de préférence d'environ 65% en poids à environ 70% en poids, calculé par rapport au poids total de la composition de résine époxy.

12. Procédé selon l'une quelconque des revendications 1 à 11, **caractérisé par le fait que** la charge minérale est présente sous forme poreuse ayant une densité de l'ordre de 60% à 80%, comparé à la densité du matériau de charge non poreux.

13. Procédé selon l'une quelconque des revendications 1 à 12, **caractérisé par le fait que** ladite composition de résine époxy durcissable comprend par ailleurs des additifs choisis parmi les agents de durcissement, les composés hydrophobes incluant les silicones, les agents mouillants/dispersants, les plastifiants, les antioxydants, les absorbeurs de lumière, les pigments, les retardateurs de flamme, les fibres, les agents de ténacité et d'autres additifs généralement utilisés dans les applications électriques.

14. Procédé de durcissement de la composition de résine époxy non durcie préparée selon un procédé selon l'une quelconque des revendications 1 à 15, optionnellement avec application de vide, **caractérisé par le fait que** la composition de résine époxy non durcie est chauffée à une température de l'ordre de 50°C à 280°C, de préférence de l'ordre de 100°C à 200°C, de préférence de l'ordre de 100°C à 170°C, et de préférence d'environ 130°C pendant un temps de durcissement de l'ordre d'environ 30 minutes à environ 10 heures.

15. Procédé selon la revendication 14, **caractérisé par le fait que** ledit procédé de durcissement de la composition de résine époxy non durcie est appliqué pendant le Processus de Coulée sous Vide ou Processus de Gélification sous Pression Automatisée (APG) à une composition telle que définie dans l'une quelconque des revendications 1 à 16, dans lequel lesdits processus sont réalisés à une température de coulée de l'ordre de 50°C à 150°C, typiquement à une température d'environ 65°C, et dans lequel une telle étape de durcissement est réalisée dans un moule pendant un temps suffisant pour façonner la composition de résine époxy à sa structure tridimensionnelle infusible finale.
